# EUROPÄISCHE PATENTANMELDUNG

(11) **EP 2 522 503 A2**
(43) Veröffentlichungstag der Anmeldung: **14.11.2012**
(21) Anmeldenummer: 12167113.5
(22) Anmeldetag: 08.05.2012
(51) Int. Cl.: B32B 7/12, B32B 5/02, B32B 5/18, B32B 5/24, B32B 5/26, B32B 9/00, B32B 9/04, B32B 19/04, B32B 21/10, B32B 21/14, E04B 1/94, C09K 21/12, B27D 1/04

(54) **Verbundelement**

(30) Priorität: 12.05.2011 AT 6812011; 02.11.2011 AT 16062011
(71) Anmelder: List components & furniture GmbH, 2842 Edlitz-Thomasberg (AT)
(72) Erfinder: Aigner, Andreas, 8644 St. Lorenzen im Mürztal (AT)
(74) Vertreter: Patentanwaltskanzlei Matschnig & Forsthuber OG

(57) **Zusammenfassung**

Die Erfindung betrifft ein Verbundelement (100), umfassend ein Kernelement (1), welches Kernelement (1) aus einem nicht brennbaren Material gebildet ist, wobei das Kernelement (1) an zumindest einer seiner Außenflächen (2, 3) mit einer Deckschicht (10, 11) versehen ist, und wobei die Deckschicht (10, 11) mittels einer Klebeverbindung (20) mit dem Kernelement (1) verbunden ist, und wobei
-) die Klebeverbindung (20) aus einer Klebstoffmischung besteht, welche Klebstoffmischung aus einem mit einem Flammschutzmittel vermischten Klebstoff besteht, oder
-) die Klebeverbindung (20) aus einem Klebstoff gebildet ist, welcher Klebstoff ein Polykondensationsklebstoff ist oder einen Polykondensationsklebstoff umfasst..

## Beschreibung

### Die Erfindung betrifft ein Verbundelement.

An die im Yachtbau und Schiffen, insbesondere Kreuzfahrtschiffen verwendeten Materialien, welche etwa beim Innenausbau, z.B. der Kabinen zum Einsatz kommen, werden hohe Anforderungen gestellt, insbesondere was die Feuerfestigkeit dieser Materialien betrifft.

Beispielsweise werden solche Materialien für Wandaufbauten, Wandunterkonstruktionen, zur Deckenmontage, für Deckenunterkonstruktionen, Lüftungsboxen für Yachten und Kreuzfahrtschiffe etc. verwendet.

Neben der Feuerfestigkeit ist es auch noch von Vorteil, wenn diese Materialien relativ leichtgewichtig sind.

Häufig kommen Silikatplatten zum Einsatz, auf welche zur Stabilisierung der Platte eine Laminatschicht aufgebracht wird. Diese Konstruktionen sind allerdings nicht ausreichend feuerbeständig und erfüllen insbesondere nicht die relevanten Brandprüfungen, weshalb diese Konstruktionen auch in der Brandlastberechnung berücksichtigt werden müssen. Die Grenzen der Brandlast werden damit häufig überschritten, was zahlreiche Probleme verursacht.

Es ist eine Aufgabe der Erfindung, ein feuerbeständiges Material zu schaffen, welches insbesondere zum Einsatz im Yachtenbau geeignet ist.

Diese Aufgabe wird mit einem eingangs erwähnten Verbundelement gelöst, welches umfasst:
ein Kernelement, welches Kernelement aus einem nicht brennbaren Material gebildet ist, wobei das Kernelement an zumindest einer seiner Außenflächen mit einer Deckschicht versehen ist, und wobei die Deckschicht mittels einer Klebeverbindung mit dem Kernelement verbunden ist, und wobei
   - ) die Klebeverbindung aus einer Klebstoffmischung besteht, welche Klebstoffmischung aus einem mit einem Flammschutzmittel vermischten Klebstoff besteht, oder
   - ) die Klebeverbindung aus einem Klebstoff gebildet ist, welcher Klebstoff ein Polykondensationsklebstoff ist oder einen Polykondensationsklebstoff umfasst.

Die "nicht Brennbarkeit" von Materialien ist beispielsweise definiert in IMO MSC 61(67) FTP Code Part 1 IMO- Resolution A.799 (19), der Baustoffklasse DIN 4102, der Baustoffklasse DIN EN 13501, sowie in den folgenden Normen: EN ISO 1182, EN ISO 1716, EN ISO 9239, DIN 5510.

Im Vergleich dazu ist z.B. Laminat nach Brandklasse Baustoffklasse DIN 4102- 1 B1 schwer entflammbar, aber nicht "nicht brennbar". Entsprechend müsste das Laminat in der Brandlastberechnung berücksichtigt werden und ist daher als Kernelement nicht geeignet.

Solche "nicht brennbaren" Kernelemente sind feuerbeständig und bestehen die notwendigen Brandprüfungen, sind allerdings häufig mechanisch nicht besonders stabil und somit für sich alleine genommen für die gewünschten Zwecke wie oben beschrieben nicht verwendbar. Durch Anbringen einer geeigneten Deckschicht mittels eines geeigneten Klebstoffes oder einer geeigneten Klebstoffmischung (Klebstoff + Flammschutzmittel) wird einerseits die mechanische Stabilität des erfindungsgemäßen Verbundelementes realisiert und das Zerbrechen des Kernelementes verhindert, andererseits ist dieses Verbundelement auch feuerbeständig und besteht die relevanten Brandprüfungen.

Bei einer konkreten Ausgestaltung eines erfindungsgemäßen Verbundelementes ist vorgesehen, dass eine Deckschicht an der Oberseite und/oder der Unterseite des Kernelementes, vorzugsweise an der Oberseite und der Unterseite vorgesehen ist.

Ein solches Verbundelement lässt sich einfach herstellen und liefert - neben der geforderten Feuerfestigkeit - auch die notwendige mechanische Stabilität des Verbundelementes.

Typische Verbundelemente sind als Platten ausgebildet, d.h. in Form eines Quaders ausgebildet, wobei die Kanten des quaderförmigen Kernelementes an den vier Schmalseiten, roh, d.h. unbeschichtet bleiben.

Eine beispielhafte Abmessung für ein solches Verbundelement ist L x B x H = 2780 mm x 1280 mm x 16 mm. Grundsätzlich sind die Abmessungen aber unerheblich.

Die Seiten/Kanten des Verbundelementes bleiben unbeschichtet, weil eine Beschichtung nicht notwendig ist. Die Verbundelemente in Form von Platten werden beispielsweise mit den oben genannten Maßen hergestellt, aus diesen großen Platten werden die benötigten Einzelteile herausgeschnitten und weiterverarbeitet.

Um die nicht Brennbarkeit des Verbundelementes zu erreichen ist vorgesehen, dass der Klebstoff der Klebstoffmischung ein Polykondensationsklebstoff (beispielsweise Harnstoff, Melamin, Phenol, Resorcinol) ist oder einen Polykondensationsklebstoff umfasst.

Eine besonders gute nicht Brennbarkeit ist gewährleistet, wenn das Kernelement im Wesentlichen aus anorganischem Material gebildet ist.

Z.B. kann es sich bei dem nicht brennbaren, anorganischen Material um Stein oder Glas (Calciumsilikatplatten) handeln.

Oder das im Wesentlichen anorganische Material besteht aus einem Basismaterial, wie etwa Blähglaskügelchen oder Schaumglaskügelchen, etc., welche im Wesentlichen oder vollständig aus anorganischem Material gebildet sind, und dieses Basismaterial ist mit einem anorganischen Bindemittel gebunden.

Als besonders günstig hinsichtlich der nicht Brennbarkeit hat es sich herausgestellt, wenn das Kernelement eine Blähglasplatte oder Schaumglasplatte ist.

Das Kernelement in Form einer Blähglasplatte oder Schaumglasplatte ist feuerbeständig und besteht die notwendigen Brandprüfungen. Allerdings sind diese Glasplatten sehr zerbrechlich und somit für sich alleine genommen für die gewünschten Zwecke wie oben beschrieben nicht verwendbar. Durch Anbringen einer geeigneten Deckschicht mittels einer geeigneten Klebstoffmischung oder eines geeigneten Klebers wird einerseits die mechanische Stabilität des erfindungsgemäßen Verbundelementes realisiert und das Zerbrechen der Blähglasplatte verhindert, andererseits ist dieses Verbundelement auch feuerbeständig und besteht die relevanten Brandprüfungen.

Eine relevante Prüfung im Yachtbereich ist z.B. die "Brandprüfung - Nichtbrennbarkeit gemäß IMO MSC 61(67) FTP Code Part 1 IMO- Resolution A.799 (19) und IMO MSC / Circ. 1120".

Ein erfindungsgemäßes Verbundelement muss daher nicht in der Brandlastberechnung z.B. der Räume berücksichtigt werden.

Ein weiterer Vorteil in der Verwendung von Bläsglasplatten oder Schaumglasplatten besteht darin, dass diese - neben der Nicht-Brennbarkeit - nur eine sehr geringe thermische Ausdehnung unter Temperatureinwirkung, beispielsweise im Vergleich zu metallischen Platten aufweisen. Aluminiumplatten beispielsweise weisen eine deutliche größere Ausdehnung auf als Bläh- oder Schaumglasplatten, was bei der Anwendung für die Anwendungen, bei welchen das erfindungsgemäße Verbundelement vorgesehen ist, äußerst nachteilig ist.

Kernelemente aus Kunststoff, etwa aus Hart-PVC brennen ebenfalls nicht, weisen aber ebenso in nachteiliger Weise eine starke Ausdehnung unter Temperatureinwirkung auf, und insbesondere von Nachteil ist, dass diese außerdem schmelzen.

Bei einer konkreten Ausgestaltung der Erfindung ist vorgesehen, dass der Klebstoff oder die Klebstoffmischung mit einer Auftragsmenge von 30 - 800 g/m² aufgebracht ist.

Die Klebstoffmischung wird dabei auf das Kernelement, z.B. beidseits (bei zwei Deckschichten) aufgetragen, beispielsweise händisch oder mit einer maschinellen Leimauftragswalze. Anschließend wird bzw. werden die Decksicht(en) aufgelegt und der Gesamtverbund wird in einer Plattenpresse zu dem finalen Verbundelement verpresst.

Grundsätzlich ist es von Vorteil, möglichst wenig Klebstoff oder Klebstoffmischung zu verwenden, um die nicht Brennbarkeit gewährleisten zu können. Andererseits sollte ausreichend Klebstoff(-mischung) verwendet werden, um einen gute mechanische Verbindung zwischen dem Kernelement und der zumindest einen Deckschicht gewährleisten zu können.

Insbesondere kann es daher von Vorteil sein, wenn der Klebstoff oder die Klebstoffmischung mit einer Auftragsmenge von 100 - 700 g/m² aufgebracht ist, oder wenn der Klebstoff oder die Klebstoffmischung mit einer Auftragsmenge von 200 - 600 g/m² aufgebracht ist, oder wenn der Klebstoff oder die Klebstoffmischung mit einer Auftragsmenge von 400 - 500 g/m² aufgebracht ist.

Um die "Nicht Brennbarkeit" des Verbundelementes zu gewährleisten, ist es weiters von Vorteil, wenn der Klebstoff ein aminoplastischer Klebstoff ist, beispielsweise ein UF-Harz-Klebstoff ist.

Weiters ist es günstig, wenn das Flammschutzmittel ein halogenfreies Flammschutzmittel ist, z.B. auf Basis von Ammoniumpolyphosphat oder Organophosphat ist.

Von Vorteil in Hinblick auf die nicht Brennbarkeit des Verbundelementes ist es außerdem noch, wenn die zumindest eine Deckschicht aus einem anorganischen Material gebildet ist Weiters kann vorgesehen sein, dass die zumindest eine Deckschicht aus einem Fasermaterial gebildet ist, oder dass die zumindest eine Deckschicht aus einem Gewebe, Gelege, Vlies oder Filz gebildet ist.

Beispielsweise wird ein ca. 5mm dicker Filz, insbesondere Basaltfilz (Dichte vorzugsweise etwa 300g/m² bis 600g/m²) mit Harz, vorzugsweise Melaminharz durchtränkt und in einer Presse zu einer Filzplatte (zu einem Filzlaminat) verpreßt. Typische Dicken solcher Filzplatten liegen bei ca. 1mm.

Diese Deckschicht wird anschließend erfindungsgemäß mit einem Kleber wie oben erwähnt mit einem Kernelement, etwa einer Bläh- oder Schaumglasplatte, verklebt (verpreßt).

Hierbei ist es wieder von Vorteil, wenn das Fasermaterial, das Gewebe, Gelege, der Filz oder das Vlies aus einem anorganischen Material gebildet sind.

Die angegebenen Materialien wie Fasermaterial, Gewebe, Gelege, Filz oder Vlies haben den Vorteil, dass diese von dem Klebstoff oder der Klebstoffmischung gut durchdrungen werden können und so zu einem stabilen Verbund führen.

Insbesondere hat es sich als vorteilhaft erwiesen, wenn die zumindest eine Deckschicht aus Basalt oder einem Basaltgewebe gebildet ist.

Beispielsweise handelt es sich dabei um eine Kaschierung aus Basaltgewebe in Form einer Leinwandbindung.

Dabei ist es weiters von Vorteil, wenn das Basaltgewebe eine Dichte von maximal 150g/m² aufweist.

Es kann aber auch vorgesehen sein, dass die zumindest eine Deckschicht aus (organischem) Carbon oder aus einem Carbongewebe gebildet ist.

Beispielsweise handelt es sich dabei um eine Kaschierung aus Carbongewebe in Form einer Köperbindung.

Dabei ist mit Vorteil vorgesehen, dass das Carbongewebe eine Dichte von maximal 160g/m² aufweist.

Basalt und Carbon haben den Vorteil, dass sie praktisch unbrennbar und sehr stabil sind.

Schließlich kann auch noch vorgesehen sein, dass die zumindest eine Deckschicht aus einem Laminat gebildet ist.

Die Dichte bzw. das Gewicht des Materials der Deckschichten(en), insbesondere des Gewebes (Basalt, Carbon) ist dabei derart gewählt, dass der Klebstoff die Deckschicht/das Gewebe optimal durchdringen kann, um so eine Bindung zwischen der Decksicht und dem Kernelement herstellen zu können. Bei zu hoher Dichte der Deckschicht/des Gewebes der Deckschicht kann der Klebstoff diese nicht mehr (optimal) durchdringen und so keine (optimale) Haftung mehr herstellen.

Die Verwendung von Basaltgewebe ist kostengünstiger als jene von Carbongewebe, Carbongewebe hingegen hat den Vorteil, dass es schneller verfügbar und schon länger am Markt ist, und dementsprechend mehr Erfahrung bezüglich der Verarbeitung und des Verhaltens von Carbongewebe existiert.

Schließlich ist es noch günstig, wenn die zumindest eine Decksicht einen Schmelztemperatur von über 350°C, insbesondere über 600°C bzw. über 1000°C aufweist.

Bei Glasfasern liegt diese Schmelztemperatur bei > 400 - 650°C, bei Basaltfasern bei > 1450°C, und bei Carbonfaser bei > 3650°C.

Aramidfaser ist selbstverlöschend durch einen hohen Sauerstoffindex von 29%, aber nicht "nicht brennbar", kann aber ebenfalls für die Deckschichten verwendet werden.

Bei einer weiteren Variante kann noch vorgesehen sein, dass auf die zumindest eine, vorzugsweise auf beide Deckschichten jeweils eine Schicht aus einem Furnier aufgebracht ist.

Vorzugsweise ist das Furnier mit einem Flammschutzmittel versehen, wobei mit Vorteil das Furnier in dem Flammschutzmittel, vorzugsweise in einem organischen Flammschutzmittel getränkt ist.

Insbesondere hat es sich als vorteilhaft herausgestellt, wenn das Furnier mit dem Flammschutzmittel, z.B. einem organischen oder anorganischen Flammschutzmittel besprüht ist.

Weiters hat es sich als günstig herausgestellt, wenn das Furnier mit dem Flammschutzmittel in zumindest einem, vorzugsweise genau einem Tränkzyklus mit dem Flammschutzmittel getränkt ist.

Ebenso hat es sich als günstig erwiesen, wenn das Furnier in einem oder mehreren, vorzugsweise in 1 - 4 Spritzgängen, mit dem Flammschutzmittel, beispielsweise mit jeweils 50 - 100 g/m^2 Quadratmeter Flammschutzmittel je Spritzgang, versehen wird.

Abhängig von der Art des Holzes weist die Furnier-Deckschicht vorzugsweise eine Stärke von 0,45 mm - 0,9 mm, beispielsweise 0,7 mm auf.

Um einen stabilen, brandhemmenden Verbund zu erzeugen, ist weiters vorgesehen, dass eine Furnierschicht mittels einer Klebeverbindung in Form eines aminoplastischen Klebstoffes oder eines Polykondensationsklebstoffes mit einer Deckschicht verbunden ist.

Vorzugsweise umfasst die Klebeverbindung ein Melaminharz oder Harnstoffformaldehydharz.

Dabei kann es von Vorteil sein, wenn das Harnstoffformaldehydharzsystem (das Harnstoff formaldehydharz) mit einem Flammschutzmittel versehen ist.

Bei Verwendung von Melaminharzklebstoff hat sich herausgestellt, dass eine Beimengung eines Flammschutzmittels nicht unbedingt notwendig ist; eine solche Beimengung kann aber auch hier von Vorteil sein.

Im Falle von z.B. Harnstoffformaldehydharz als Klebstoff wird Flammschutzmittel dem Klebstoff beigemengt. Der Klebstoff (Harnstoffformaldehydharz) liegt in Form eines Pulvers vor, welches mit Wasser abgemischt wird. Diesem Klebstoffpulver wird das Flammschutzmittel ebenfalls in Pulverform beigemengt. Dem pulverförmigen Harnstoffformaldehydharzklebstoff werden dabei ca. 5 - 15 % organisches Flammschutzmittel in Pulverform beigemengt, wobei die 5 - 15 % auf das Gewicht des Klebstoffpulvers bezogen sind.

Das pulverförmige Flammschutzmittel wird dabei der Mischung (Klebstoffpulver + Wasser) mit Wasser beigemengt.

Beispielsweise wird die Klebeverbindung mit einer Menge von 120 - 150 g/m^2 aufgebracht, vorzugsweise aufgewalzt oder aufgespritzt.

Das Verbundelement wird verpresst, beispielsweise in einer Taktpresse, der Pressdruck beträgt dabei beispielsweise mindestens 3,5 kg/cm^2.

Die Presstemperatur und -zeit ist vom jeweiligen Leimsystem (Klebeverbindung) abhängig.

Ein erfindungsgemäßes Verbundelement, welches an der bzw. den Außenseiten mit Furnier versehen ist, ist in der Regel für dekorative Zwecke (Sichtbereich) vorgesehen; an ein solches Verbundelement sind andere Anforderungen gestellt als z.B. bei einer Verwendung für Wandaufbauten, Wandunterkonstruktionen, zur Deckenmontage, für Deckenunterkonstruktionen, Lüftungsboxen. Ein Verbundelement mit Furnierbeschichtung besteht entsprechend die Brandprüfungen IMO FTP PART II (Smoke + Toxicity) und Part V (Surface Flammability), die Prüfung nach IMO FTP PART I (Nichtbrennbarkeit) wird in der Regel nicht bestanden, dies ist allerdings auch nicht notwendig.

Ein Verbundelement nach der Erfindung ohne Furnier besteht auch die Prüfung nach PART I.

Im Folgenden ist die Erfindung an Hand der Zeichnung näher erläutert. In dieser zeigt
Fig. 1 eine erfindungsgemäßes Verbundelement in einem schematischen Vertikalschnitt,
Fig. 2 ein Kernelement zur Verwendung in einem Verbundelement aus Figur 1, ebenfalls in einem schematischen Vertikalschnitt bzw. in einer Seitenansicht, und
Fig. 3 ein Verbundelement aus Figur 1 mit zusätzlich an den Außenseiten aufgebrachten Furnierschichten.

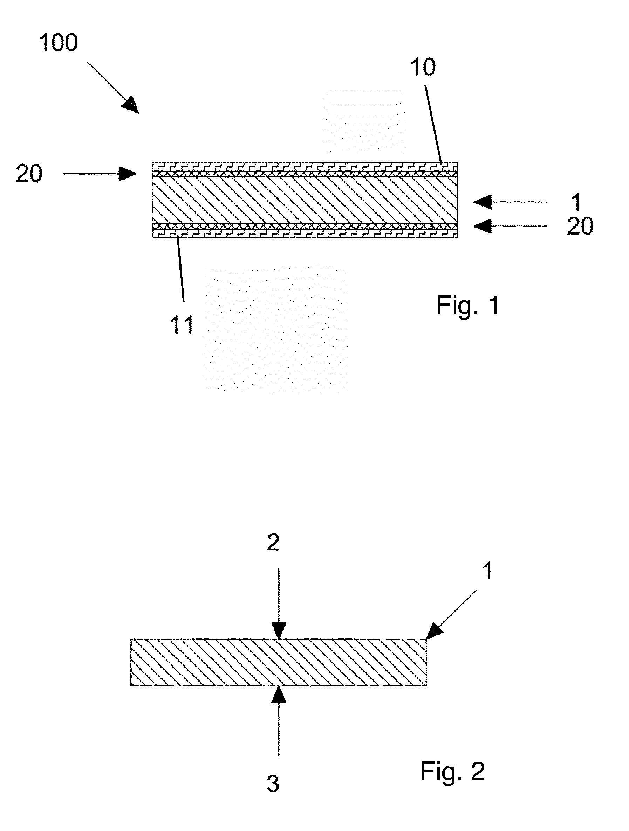

Figur 1 zeigt ein erfindungsgemäßes Verbundelement 100 in Form einer quaderförmigen Platte.

Das Verbundelement besteht aus einem Kernelement 1, wobei dieses Kernelement 1 als beispielsweise als Blähglasplatte oder als Schaumglasplatte ausgebildet ist. An zwei Außenflächen (Oberseite 2, Unterseite 3; siehe Figur 2) ist das Kernelement 1 jeweils mit einer Deckschicht 10, 11 versehen. Die Deckschichten 10, 11 sind mittels einer Klebeverbindung 20 mit dem Kernelement 1 verbunden.

Die Klebeverbindungen 20 sind dabei aus beispielsweise aus einer Klebstoffmischung gebildet, welche Klebstoffmischung aus einem mit einem Flammschutzmittel vermischten Klebstoff besteht. Der Klebstoff kann beispielsweise ein Polykondensationsklebstoff sein oder einen Polykondensationsklebstoff enthalten.

Es kann unter Umständen die nicht Brennbarkeit auch erreicht werden, wenn lediglich Polykondensationsklebstoff, ohne Beimengung von Flammschutzmittel, verwendet wird.

Die vier Schmalseiten des Verbundelementes 100 bleiben roh, d.h. unbeschichtet.

Bei einer konkreten Ausgestaltung der Erfindung ist vorgesehen, dass die Klebstoffmischung oder der Klebstoff mit einer Auftragsmenge von 400 - 600 g/m² zwischen dem Kernelement 1 und der bzw. den Deckschichten 10, 11 aufgebracht ist.

Die Klebstoffmischung wird dabei beidseits auf das Kernelement 1 aufgetragen, beispielsweise händisch oder mit einer Leimauftragsmaschine. Anschließend wird bzw. werden die Decksicht(en) aufgelegt und der Gesamtverbund wird in einer Plattenpresse zu dem finalen Verbundelement verpresst.

Vorzugsweise ist der Klebstoff ein aminoplastischer Klebstoff.

Weiters günstig ist es, wenn das Flammschutzmittel ein halogenfreies Flammschutzmittel ist, z.B. auf Basis von Ammoniumpolyphosphat.

Beispielsweise sind die Deckschichten 10, 11 aus Basalt oder einem Basaltgewebe gebildet. Beispielsweise handelt es sich dabei um eine Kaschierung aus Basaltgewebe in Form einer Leinwandbindung. Dabei ist es weiters von Vorteil, wenn das Basaltgewebe eine Dichte von maximal 220 g/m² aufweist.

Es kann auch von Vorteil sein, wenn die Deckschichten 10, 11 aus Carbon oder aus einem Carbongewebe gebildet ist. Beispielsweise handelt es sich dabei um eine Kaschierung aus Carbongewebe in Form einer Köperbindung. Dabei ist es weiters von Vorteil, wenn das Carbongewebe eine Dichte von maximal 220 g/m² aufweist.

Die Dichte bzw. das Gewicht des Gewebes (Basalt, Carbon) ist dabei derart gewählt, dass der Klebstoff das Gewebe optimal durchdringen kann, um so eine Bindung zwischen der Decksicht und dem Kernelement herstellen zu können. Bei zu hoher Dichte des Gewebes der Deckschicht kann der Klebstoff diese nicht mehr (optimal) durchdringen und so keine (optimale) Haftung mehr herstellen.

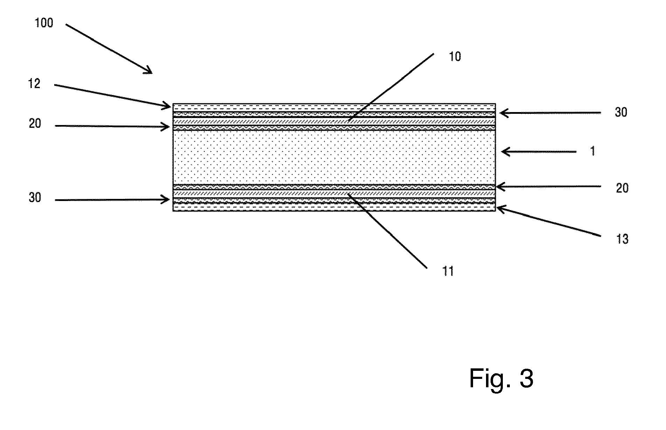

Figur 3 zeigt eine weitere Variante, bei der ausgehend von einem Verbundelement wie in Figur 1 beschrieben auf den beiden Deckschichten 10,11 jeweils noch eine Schicht 12, 13 aus einem Furnier aufgebracht ist. Vorzugsweise ist das Furnier mit einem Flammschutzmittel versehen, wobei mit Vorteil das Furnier in dem Flammschutzmittel, vorzugsweise in einem organischen Flammschutzmittel getränkt ist. Insbesondere hat es sich als vorteilhaft herausgestellt, wenn das Furnier mit dem Flammschutzmittel, z.B. einem organischen oder anorganischen Flammschutzmittel besprüht ist.

Weiters hat es sich als günstig herausgestellt, wenn das Furnier mit dem Flammschutzmittel in zumindest einem, vorzugsweise genau einem Tränkzyklus mit dem Flammschutzmittel getränkt ist. Ebenso hat es sich als günstig erwiesen, wenn das Furnier in einem oder mehreren, vorzugsweise in 1 - 4 Spritzgängen, mit dem Flammschutzmittel, beispielsweise mit jeweils 50 - 100 g/m^2 Quadratmeter Flammschutzmittel je Spritzgang, versehen wird.

Abhängig von der Art des Holzes weist die Furnier-Deckschicht vorzugsweise eine Stärke von 0,45 mm - 0,9 mm, beispielsweise 0,7 mm auf.

Um einen stabilen, brandhemmenden Verbund zu erzeugen, ist vorgesehen, dass die Furnierschichten 12, 13 jeweils mittels einer Klebeverbindung 30 in Form eines aminoplastischen Klebstoffes oder eines Polykondensationsklebstoffes mit den Deckschichten 10, 11 verbunden sind. Vorzugsweise umfasst die Klebeverbindung 30 ein Melaminharz oder Harnstoffformaldehydharz. Dabei kann es von Vorteil sein, wenn das Harnstoffformaldehydharzsystem (das Harnstoffformaldehydharz) mit einem Flammschutzmittel versehen ist.

Bei Verwendung von Melaminharzklebstoff hat sich herausgestellt, dass eine Beimengung eines Flammschutzmittels nicht unbedingt notwendig ist; eine solche Beimengung kann aber auch hier von Vorteil sein.

Im Falle von z.B. Harnstoffformaldehydharz als Klebstoff wird Flammschutzmittel dem Klebstoff beigemengt. Der Klebstoff (Harnstoffformaldehydharz) liegt in Form eines Pulvers vor, welches mit Wasser abgemischt wird. Diesem Klebstoffpulver wird das Flammschutzmittel ebenfalls in Pulverform beigemengt. Dem pulverförmigen Harnstoffformaldehydharzklebstoff werden dabei ca. 5 - 15 % organisches Flammschutzmittel in Pulverform beigemengt, wobei die 5 - 15 % auf das Gewicht des Klebstoffpulvers bezogen sind. Das pulverförmige Flammschutzmittel wird dabei der Mischung (Klebstoffpulver + Wasser) mit Wasser beigemengt.

Beispielsweise wird die Klebeverbindung mit einer Menge von 120 - 150 g/m^2 aufgebracht, vorzugsweise aufgewalzt oder aufgespritzt.

Das Verbundelement wird verpresst, beispielsweise in einer Taktpresse, der Pressdruck beträgt dabei beispielsweise mindestens 3,5 kg/cm^2.

Die Presstemperatur und -zeit ist vom jeweiligen Leimsystem (Klebeverbindung) abhängig.

## Patentansprüche

1. Verbundelement (100), umfassend
ein Kernelement (1), welches Kernelement (1) aus einem nicht brennbaren Material gebildet ist, wobei das Kernelement (1) an zumindest einer seiner Außenflächen (2, 3) mit einer Deckschicht (10, 11) versehen ist, wobei
eine Deckschicht (10, 11) vorzugsweise an der Oberseite (2) und/oder der Unterseite (3) des Kernelementes (1), insbesondere vorzugsweise an der Oberseite (2) und der Unterseite (3) vorgesehen ist,
und wobei die zumindest eine Deckschicht (10, 11) mittels einer Klebeverbindung (20) mit dem Kernelement (1) verbunden ist, und wobei
- ) die Klebeverbindung (20) aus einer Klebstoffmischung besteht, welche Klebstoffmischung aus einem mit einem Flammschutzmittel vermischten Klebstoff besteht, oder
- ) die Klebeverbindung (20) aus einem Klebstoff gebildet ist, welcher Klebstoff ein Polykondensationsklebstoff ist oder einen Polykondensationsklebstoff umfasst.

2. Verbundelement nach Anspruch 1, **dadurch gekennzeichnet, dass** der Klebstoff der Klebstoffmischung ein Polykondensationsklebstoff ist oder einen Polykondensationsklebstoff umfasst.

3. Verbundelement nach Anspruch 1 oder 2, **dadurch gekennzeichnet, dass** das Kernelement (1) im Wesentlichen aus anorganischem Material gebildet ist.

4. Verbundelement nach einem der Ansprüche 1 bis 3, **dadurch gekennzeichnet, dass** das Kernelement (1) eine Blähglasplatte oder Schaumglasplatte ist.

5. Verbundelement nach einem der Ansprüche 1 bis 4, **dadurch gekennzeichnet, dass** der Klebstoff oder die Klebstoffmischung mit einer Auftragsmenge von 30 - 800 g/m²,vorzugsweise mit einer Auftragsmenge von 100 - 700 g/m², besonders vorzugsweise mit einer Auftragsmenge von 200 - 600 g/m², insbesondere mit einer Auftragsmenge von 400 - 500 g/m² aufgebracht ist.

6. Verbundelement nach einem der Ansprüche 1 bis 5, **dadurch gekennzeichnet, dass** der Klebstoff ein aminoplastischer Klebstoff ist, beispielsweise ein UF-Harz-Klebstoff ist.

7. Verbundelement nach einem der Ansprüche 1 bis 6, **dadurch gekennzeichnet, dass** das Flammschutzmittel ein halogenfreies Flammschutzmittel ist, z.B. auf Basis von Ammoniumpolyphosphat.

8. Verbundelement nach einem der Ansprüche 1 bis 7, **dadurch gekennzeichnet, dass** die zumindest eine Deckschicht (10, 11) aus einem Fasermaterial gebildet ist.

9. Verbundelement nach einem der Ansprüche 1 bis 8, **dadurch gekennzeichnet, dass** die zumindest eine Deckschicht (10, 11) aus einem Gewebe, Gelege, Vlies oder Filz gebildet ist.

10. Verbundelement nach einem der Ansprüche 1 bis 9, **dadurch gekennzeichnet, dass** die zumindest eine Deckschicht (10, 11) aus einem anorganischen Material gebildet ist

11. Verbundelement nach einem der Ansprüche 1 bis 10, **dadurch gekennzeichnet, dass** die zumindest eine Deckschicht (10, 11) aus Basalt oder einem Basaltgewebe gebildet ist, wobei vorzugsweise das Basaltgewebe eine Dichte von maximal 220 g/m² aufweist.

12. Verbundelement nach einem der Ansprüche 1 bis 9, **dadurch gekennzeichnet, dass** die zumindest eine Deckschicht (10, 11) aus Carbon oder aus einem Carbongewebe gebildet ist, wobei vorzugsweise das Carbongewebe eine Dichte von maximal 220 g/m² aufweist.

13. Verbundelement nach einem der Ansprüche 1 bis 18 oder 10, **dadurch gekennzeichnet, dass** die zumindest eine Deckschicht (10, 11) aus einem Laminat gebildet ist.

14. Verbundelement nach einem der Ansprüche 1 bis 13, **dadurch gekennzeichnet, dass** die zumindest eine Decksicht einen Schmelztemperatur von über 350°C, insbesondere über 600°C bzw. über 1000°C aufweist.

15. Verbundelement nach einem der Ansprüche 1 bis 14, **dadurch gekennzeichnet, dass** auf die zumindest eine, vorzugsweise auf beide Deckschichten (10,11) jeweils eine Schicht (12, 13) aus einem Furnier aufgebracht ist, wobei vorzugsweise das Furnier mit einem Flammschutzmittel versehen ist, und wobei insbesondere vorzugsweise das Furnier in einem Flammschutzmittel, vorzugsweise in einem organischen Flammschutzmittel getränkt ist.

16. Verbundelement nach Anspruch 15, **dadurch gekennzeichnet, dass** das Furnier mit dem Flammschutzmittel, z.B. einem organischen oder anorganischen Flammschutzmittel besprüht ist, wobei vorzugsweise das Furnier mit dem Flammschutzmittel in zumindest einem, vorzugsweise genau einem Tränkzyklus mit dem Flammschutzmittel getränkt ist, oder wobei das Furnier in einem oder mehreren, vorzugsweise in 1 - 4 Spritzgängen, mit dem Flammschutzmittel, beispielsweise mit jeweils 50 - 100 g/m^2 Quadratmeter Flammschutzmittel je Spritzgang, versehen wird.

17. Verbundelement nach Anspruch 15 oder 16, **dadurch gekennzeichnet, dass** die Furnier-Deckschicht eine Stärke von 0,45 mm - 0,9 mm, beispielsweise 0,7 mm aufweist.

18. Verbundelement nach einem der Ansprüche 15 bis 17, **dadurch gekennzeichnet, dass** eine Furnierschicht (12, 13) mittels einer Klebeverbindung (30) in Form eines aminoplastischen Klebstoffes oder eines Polykondensationsklebstoffes mit einer Deckschicht (10, 11) verbunden ist, wobei die Klebeverbindung (30) vorzugsweise ein Melaminharz oder Harnstoffformaldehydharz umfasst, und wobei vorzugsweise das Harnstoffformaldehydharzsystem (das Harnstoffformaldehydharz) mit einem Flammschutzmittel versehen ist.

19. Verbundelement nach Anspruch 18, **dadurch gekennzeichnet, dass** die Klebeverbindung mit einer Menge von 120 - 150 g/m^2 aufgebracht, vorzugsweise aufgewalzt oder aufgespritzt ist.
